# EUROPÄISCHE PATENTSCHRIFT

(11) **EP 3 722 139 B1**
(45) Veröffentlichungstag und Bekanntmachung des Hinweises auf die Patenterteilung: **17.05.2023**
(21) Anmeldenummer: 20158131.1
(22) Anmeldetag: 19.02.2020
(51) Int. Cl.: B60L 3/00, B60L 3/04, B62M 6/45, H01M 50/204, H01M 50/598, H01M 10/48, H01M 10/42

(54) **VERFAHREN ZUR ERKENNUNG EINER ÖFFNUNG EINES GEHÄUSES, BATTERIEMODUL UND ELEKTROFAHRRAD**
BATTERY MODULE, ELECTRIC BICYCLE ANDMETHOD FOR DETECTING AN OPENING OF A HOUSING,
PROCÉDÉ DE DÉTECTION D'UNE OUVERTURE D'UN BOÎTIER, MODULE DE BATTERIE ET BICYCLETTE ÉLECTRIQUE

(30) Priorität: 10.04.2019 DE 102019205124
(43) Veröffentlichungstag der Anmeldung: 14.10.2020
(73) Patentinhaber: Robert Bosch GmbH, 70442 Stuttgart (DE)
(72) Erfinder: Zahn, Wolf, 70439 Stuttgart (DE); Lang, Ralf, 72770 Reutlingen (DE); Mehlo, Dennis, 72762 Reutlingen (DE); Lober, Philipp, 72810 Gomaringen (DE); Wille, Martin, 72532 Gomadingen (DE); Behringer, Konstantin, 72072 Tuebingen (DE); Lavall, Johannes Alex, 72766 Reutlingen (DE); Koeder, Thilo, 70839 Gerlingen (DE); Schramm, David, 72070 Tuebingen (DE); Wahlig, Michael, 72127 Kusterdingen (DE)

(56) Entgegenhaltungen:
- CN-A- 106 786 923
- DE-A1-102011 004 281
- JP-A- 2008 204 878
- US-A1- 2001 045 778
- US-A1- 2007 229 026

## Beschreibung

Die vorliegende Erfindung betrifft ein Verfahren zur Erkennung einer Öffnung eines Gehäuses eines Batteriemoduls, das Batteriemodul und ein Elektrofahrrad mit dem Batteriemodul.

### Stand der Technik

Um eine sichere Funktion eines Batteriemoduls mit Sekundärelementen beziehungsweise Batteriezellen, z.B. einer Li-lon-Batterie, zu gewährleisten, wird zur Überwachung des Lade- und Entladevorgangs ein BMS (Batterie Management System) eingesetzt. Das BMS besteht typischerweise aus den funktionalen Blöcken "Input" (Sensorik für Strom, Spannung und Temperatur), "Output" (Leistungselektronik in Form von Transistoren oder Relais) und einer "Logik" für die Datenverarbeitung, Steuerung und Kommunikation (Mikrocontroller, FPGA). Das BMS ist üblicherweise innerhalb eines Batteriegehäuses verbaut und mit den Batteriezellen beispielsweise mittels wenigstens eines Kabels oder Stanzgitters verbunden. Ein Öffnen des Gehäuses stellt in der Regel keine Herausforderung dar und einzelne Komponenten, wie Batteriezellen oder das BMS, können nach dem Öffnen entnommen und getauscht werden. Batterie Management Systeme zur Überwachung von Lade- und Entladevorgängen eines Batteriemoduls mit einer Vielzahl an Batteriezellen sind bekannt. Beispielsweise offenbart US 2013020970 AA ein Batterie Management System (BMS) eines Batteriemoduls für ein Elektrofahrrad. US 2007/229026 A1, JP 2008 204878 A oder DE 10 2011 004281 A1 offenbaren auch Beispiele von Systemen oder Verfahren zur Erkennung der Öffnung eines Batteriemoduls.

Ein Batteriemodul eines Elektrofahrrads kann eine hohe Leistungsdichte bzw.

Kapazität aufweisen, wodurch Beschädigungen des Batteriemoduls prinzipiell für einen Nutzer eines Elektrofahrrads gefährlich sein können. Durch unsachgemäße Reparatur oder einen Einsatz nicht geeigneter Komponenten im Batteriemodul kann es zu für einen Nutzer zu gefährlichen Beschädigungen des Batteriemoduls kommen.

Die Aufgabe der vorliegenden Erfindung ist es, einen Betrieb eines Elektrofahrrads mit einem potentiell gefährlichen Batteriemodul zu vermeiden.

### Offenbarung der Erfindung

Die vorliegende Erfindung betrifft ein Verfahren zur Erkennung einer Öffnung eines Gehäuses eines Batteriemoduls. Das Verfahren beginnt mit einer Erfassung einer ersten Messgröße mittels eines ersten Sensors, wobei die erfasste erste Messgröße eine erkannte Öffnung des Gehäuses repräsentiert und der erste Sensor insbesondere im Gehäuse des Batteriemoduls angeordnet ist. Anschließend erfolgt eine Erzeugung eines ersten Sensorsignals mittels des ersten Sensors in Abhängigkeit der erfassten ersten Messgröße. In Abhängigkeit des ersten Sensorsignals des ersten Sensors wird ein Batterie Management System des Batteriemoduls aktiviert, wobei das Batterie Management System insbesondere im Gehäuse angeordnet ist. Das Batterie Management System erzeugt ein Verriegelungssignal in Abhängigkeit des ersten Sensorsignals des ersten Sensors. In Abhängigkeit des erzeugten Verriegelungssignals erfolgt eine Deaktivierung des Batterie Management Systems. Dadurch resultiert der technische Effekt, dass das Batteriemodul nicht mehr in einem Normalbetrieb verwendet werden kann beziehungsweise als Energiespeicher nicht mehr geladen und/oder entladen werden kann.

Erfindungsgemäß erfolgt eine Erfassung einer weiteren Messgröße mittels eines weiteren Sensors, wobei die erfasste weitere Messgröße ebenfalls die Öffnung des Gehäuses repräsentiert und der weitere Sensor insbesondere im Gehäuse angeordnet ist. Die weitere Messgröße unterscheidet sich vorteilhafterweise von der ersten Messgröße. Der weitere Sensor kann beispielsweise ein anderes Sensorprinzip zur Erfassung der Messgröße als der erste Sensor verwenden. Beispielsweise ist der weitere Sensor eine Photodiode und der erste Sensor ein mechanischer Taster. Alternativ erfassen der erste Sensor und der weitere Sensor die gleiche Messgröße an unterschiedlichen Stellen. Anschließend erfolgt eine Erzeugung eines weiteren Sensorsignals mittels des weiteren Sensors in Abhängigkeit der erfassten weiteren Messgröße. In dieser Ausgestaltung wird die Erzeugung des Verriegelungssignals zusätzlich in Abhängigkeit des weiteren Sensorsignals durchgeführt. Durch die Erzeugung des Verriegelungssignals in Abhängigkeit von zwei Sensorsignalen wird eine versehentliche Deaktivierung des Batterie Management Systems sehr unwahrscheinlich.

In einer weiteren Ausgestaltung wird eine Kontrollleuchte in Abhängigkeit des erzeugten Verriegelungssignals eingeschaltet, wobei die Kontrollleuchte an einer Außenfläche des Gehäuses angeordnet ist. Dadurch wird vorteilhafterweise die Deaktivierung des Batterie Management Systems durch eine Öffnung des Batteriemodulgehäuses von außen einem Nutzer und/oder Händler leicht erkennbar angezeigt.

In einer bevorzugten Ausgestaltung erfolgt nach der Deaktivierung des Batterie Management Systems eine Reaktivierung des Batterie Management Systems durch ein Rücksetzsignal, wobei das Rücksetzsignal mittels einer externen Recheneinheit erzeugt wird. Das Rücksetzsignal wird vorteilhafterweise per Datenkabel an einem Stecker des Batteriemoduls oder per Funkverbindung von der externen Recheneinheit an das Batterie Management System übertragen.

In einer weiteren Ausgestaltung erfolgt die Deaktivierung des Batterie Management Systems mittels eines elektrischen Schalters, mittels eines Schreibens eines Parameters in ein elektrisches Speicherelement des Batterie Management Systems, und/oder irreversibel mittels einer Schmelzsicherung in einem Schaltkreis des Batterie Management Systems.

Das erfindungsgemäße Batteriemodul umfasst ein Gehäuse und ein Batterie Management System, welches dazu eingerichtet ist, das erfindungsgemäße Verfahren durchzuführen. Das BMS ist insbesondere im Gehäuse angeordnet. Das Batteriemodul weist ferner zumindest einen ersten Sensor auf, welcher dazu eingerichtet ist, eine erste Messgröße zu erfassen, welche eine erkannte Öffnung des Batteriemodulgehäuses repräsentiert, und in Abhängigkeit der erfassten ersten Messgröße ein erstes Sensorsignal zu erzeugen. Der erste Sensor ist insbesondere im Gehäuse angeordnet.

In einer bevorzugten Ausführung umfasst der erste Sensor des Batteriemoduls einen Lichtsensor, welcher eingerichtet ist, bei einer Öffnung des Gehäuses einfallendes Licht zu erfassen. Alternativ oder zusätzlich umfasst der erste Sensor einen Temperatursensor, welcher eingerichtet ist, eine Temperaturänderung bei einer Öffnung des Gehäuses zu erfassen. Alternativ oder zusätzlich umfasst der erste Sensor einen Gas- und/oder Feuchtigkeitssensor, welcher eingerichtet ist, bei einer Öffnung des Gehäuses eine Veränderung der Luftzusammensetzung zu erfassen. Alternativ oder zusätzlich umfasst der erste Sensor einen mechanischen Taster, welcher eingerichtet ist, bei einer Öffnung des Gehäuses betätigt zu werden. Alternativ oder zusätzlich umfasst der erste Sensor einen Magnetsensor, insbesondere ein Reed-Schalter, welcher eingerichtet ist, bei einer Öffnung des Gehäuses betätigt zu werden. Alternativ oder zusätzlich umfasst der erste Sensor einen kapazitiven Sensor, welcher eingerichtet ist, bei Öffnung des Gehäuses seine Kapazität zu ändern. Alternativ oder zusätzlich umfasst der erste Sensor einen induktiven Sensor, welcher eingerichtet ist, bei Öffnung des Gehäuses seine Induktivität zu ändern. Alternativ oder zusätzlich umfasst der erste Sensor einen Strom- und/oder Spannungssensor, welcher eingerichtet ist, eine Änderung eines Alterungszustands mindestens einer Batteriezelle zu erfassen. Alternativ oder zusätzlich umfasst der erste Sensor eine eine RFID-Markierung, welche eingerichtet ist, bei einer Öffnung des Gehäuses beschädigt zu werden. Alternativ oder zusätzlich umfasst der erste Sensor eine elektrische Leitung, welche eingerichtet ist, bei einer Öffnung des Gehäuses zu reißen. Durch diese Sensortypen kann vorteilhafterweise die Öffnung des Gehäuses zuverlässig erkannt werden.

In einer besonders bevorzugten Ausgestaltung umfasst das Batteriemodul wenigstens eine der folgenden Komponenten: Einen elektrischen Schalter, ein elektrisches Speicherelement des Batterie Management Systems und/oder eine Schmelzsicherung in einem Schaltkreis des Batterie Management Systems. Die wenigstens eine Komponente ist dazu eingerichtet, das Batterie Management System in Abhängigkeit eines Verriegelungssignals zu deaktivieren. Durch diese Komponenten wird vorteilhafterweise das Batterie Management System zuverlässig deaktiviert.

In einer Weiterführung ist der erste Sensor des Batteriemoduls zur Energieversorgung mit Batteriezellen des Batteriemoduls und/oder mit einem separaten Energiespeicher verbunden. Dadurch ist der erste Sensor vorteilhafterweise dazu eingerichtet, die Öffnung des Gehäuses zu erkennen. Vorzugsweise ist der erste Sensor ein passiver Sensor. Mit anderen Worten verbraucht der erste Sensor im Normalbetrieb vorteilhafterweise keine oder kaum Energie. Beispielsweise ist der erste Sensor eine Photodiode, welche bei Lichteinfall einen Strom als erstes Sensorsignal erzeugt, oder ein mechanischer Taster, welcher dazu eingerichtet ist, nur bei Bewegung des Tasters Energie zur Erzeugung des ersten Sensorsignals zu verbrauchen und/oder alternativ Energie durch die Bewegung des Tasters zu erzeugen.

Die Erfindung betrifft auch ein Elektrofahrrad, aufweisend ein erfindungsgemäßes Batteriemodul.

Weitere Vorteile ergeben sich aus der nachfolgenden Beschreibung von Ausführungsbeispielen mit Bezug zu den Figuren.
Figur 1: Elektrofahrrad
Figur 2: Batteriemodul
Figur 3: Verfahren zur Erkennung einer Öffnung eines Gehäuses

### Ausführungsbeispiele

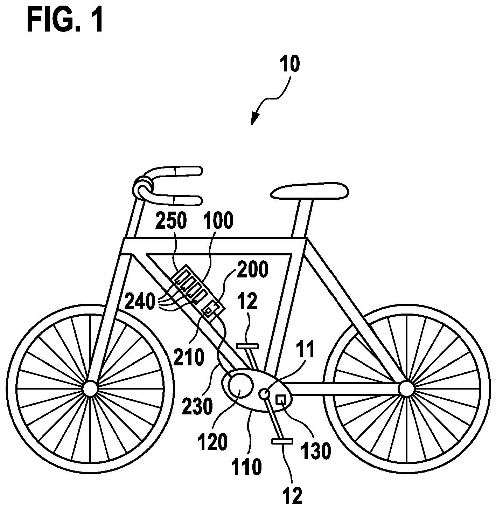

In Figur 1 ist ein Elektrofahrrad 10 schematisch dargestellt. Das Elektrofahrrad 10 umfasst ein Batteriemodul 100 und einen Elektromotor als Antriebsmotor 120. Der Antriebsmotor 120 und ein Steuergerät 130 sind vorteilhafterweise in einem Gehäuse einer Antriebseinheit 110 angeordnet, welche beispielsweise an einer Tretachse 11 des Elektrofahrrads 10 oder alternativ an einer Radnabe eines Rads des Elektrofahrrads 10 angeordnet ist. Eine Trittkraft eines Nutzers des Elektrofahrrads 10 wird durch Pedale 12 und Kurbeln an die Tretachse 11 übertragen. Vorzugsweise wird an der Tretachse 11 oder an einer mit der Tretachse 11 verbundenen Getriebekomponente der Antriebseinheit 110 mittels eines Drehmomentsensors ein Drehmoment erfasst. Das von dem Drehmomentsensor erfasste Drehmoment repräsentiert die Trittkraft des Nutzers. Der Antriebsmotor 120 wird mittels eines Steuergeräts 130 beispielsweise in Abhängigkeit des erfassten Drehmoments angesteuert. Das Batteriemodul 100 umfasst ein Gehäuse 250, wobei in dem Gehäuse eine Vielzahl an Energiespeichern beziehungsweise Batteriezellen 240 angeordnet sind. Das Batteriemodul 100 ist mittels eines elektrischen Kabels 230 insbesondere mit dem Antriebsmotor 120 der Antriebseinheit 110 verbunden und dazu eingerichtet, den Antriebsmotor 120 mit Energie zum Antrieb des Elektrofahrrads 10 zu versorgen. Zum Antrieb des Elektrofahrrads 10 beziehungsweise zur Entladung des Batteriemoduls 100 und/oder zum Laden des Batteriemoduls 100 weist das Batteriemodul 100 ein Batterie Management System (BMS) 200 auf. Das BMS 200 umfasst eine Recheneinheit 210, welche dazu eingerichtet ist, ein Laden und/oder Entladen des Batteriemoduls 100 zu steuern. Beispielsweise überwacht das BMS 200 eine Spannung von parallel geschalteten Batteriezellen 240 und/oder jeder Batteriezelle 240 des Batteriemoduls 100. Das BMS 200 ist ferner dazu eingerichtet, den Strom beziehungsweise eine Lade- und/oder Entladespannung für die parallel geschalteten Batteriezellen 240 und/oder die jeweilige Batteriezelle 240 zu steuern.

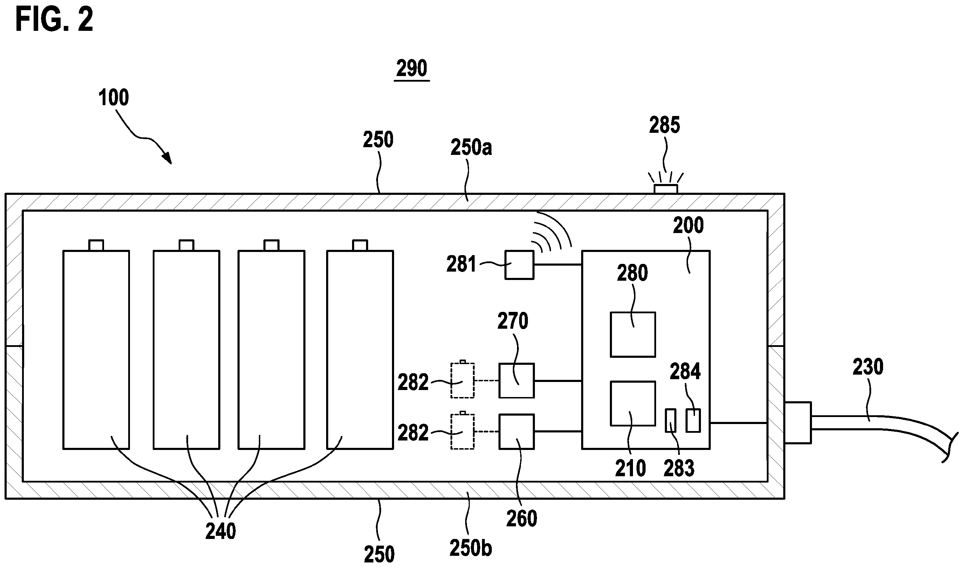

In Figur 2 ist das Batteriemodul 100 mit dem Batteriegehäuse 250 gegenüber Figur 1 vergrößert und schematisch dargestellt. Das Gehäuse 250 des Batteriemoduls 100 weist ein erstes Gehäuseteil 250a und ein zweites Gehäuseteil 250b auf. Das Gehäuse 250 umfasst die Batteriezellen 240 und das BMS 200 mit einer Recheneinheit 210. Die Batteriezellen 240 sind beispielsweise mittels mindestens eines Stanzgitters und/oder Kabeln beziehungsweise sonstigen elektrischen Verbindungen verschaltet (nicht gezeigt), beispielsweise teilweise parallel und/oder in Reihe, so dass sich die Ausgangsspannung des Batteriemoduls 100 auf insbesondere 12 V bis 48 V, bevorzugt auf typischerweise 18 V bis 42 V, erhöht. Am Gehäuse 250 ist das elektrische Kabel 230 angeschlossen, welches insbesondere die Batteriezellen 240 mit dem Antriebsmotor 120 elektrisch verbindet, wobei das BMS 200 elektrisch insbesondere zwischen den Batteriezellen 240 und dem Antriebsmotor 120 geschaltet ist, so dass das BMS 200 beispielsweise die Ausgangsspannung und/oder den Ausgangsstrom beim Entladen beziehungsweise die jeweilige Batteriezelle 240 als Energiequelle steuern, begrenzen beziehungsweise schalten kann. Nach der Herstellung ist das Batteriegehäuse 250 vorzugsweise gegenüber der Umgebung 290 des Batteriegehäuses 250 luft- und wasserdicht verschlossen, beispielsweise mittels Dichtungen und/oder Klebungen zwischen dem ersten Gehäuseteil 250a und dem zweiten Gehäuseteil 250b sowie an einer optionalen Durchführung des Kabels 230 beziehungsweise an der Durchführung eines Steckverbinders. Einem Fachmann ist es möglich das Gehäuse 250 aus Figur 2 zur Reparatur zu öffnen, beispielsweise durch eine Trennung des ersten Gehäuseteils 250a vom zweiten Gehäuseteil 250b oder durch Entfernung eines anderen Teils des Gehäuses 250. Während der Reparatur wird beispielsweise ein defektes BMS 200 durch ein neues BMS 200 und/oder eine defekte Batteriezelle 240 durch eine neue Batteriezelle 240 ersetzt beziehungsweise ausgetauscht. Die eine neue Batteriezelle 240 oder die mehreren neue Batteriezellen 240 können ungeeignet in ihrer chemischen Zusammensetzung, ungeeignet bezüglich ihrer elektrischen Parameter, wie Ladeschlussspannung und/oder Innenwiderstand, oder ungeeignet bezüglich ihren mechanischen Abmessungen sein. Das Batteriegehäuse 250 wird in der Regel nach der Reparatur erneut luft- und wasserdicht verschlossen. Beim Öffnen des Gehäuses 250 können Dichtungen und/oder Klebungen des Gehäuses 250 zum Teil zerstört oder beschädigt werden. Wenn die Dichtungen und/oder Klebungen nach der Reparatur nicht ersetzt werden beziehungsweise das Gehäuse 250 nach der Reparatur unfachmännisch, d.h. mangelhaft, verschlossen ist, kann in das Gehäuse 250 nach der Reparatur langfristig ein Wassereintritt erfolgen. Dieser Wassereintritt kann einen für den Betrieb des Elektrofahrrads 10 sicherheitskritischen Schaden am Batteriemodul 100 verursachen. Ferner kann ein neues BMS 200 fehlerhaft sein. Ein Fehler des neuen BMS 200 muss nicht unmittelbar nach der Reparatur ersichtlich sein, da er beispielsweise nur bestimmte Betriebszustände beim Entladen beziehungsweise beim Antrieb des Elektrofahrrads 10 und/oder bestimmte Ladezustände des Batteriemoduls 100 betrifft. Alternativ oder zusätzlich kann das neue BMS 200 eine gegenüber dem ursprünglichen BMS 200 geringere Anzahl an Sicherheitsfunktionen aufweisen. Auch diese mögliche, fehlende Sicherheitsfunktion des neuen BMS 200 kann beispielsweise erst lange Zeit nach einer Reparatur relevant werden und damit erst spät zu einem für den Nutzer im Betrieb des Elektrofahrrads sicherheitskritischen Vorfall führen, welcher gegebenenfalls vom Nutzer nicht mehr als durch die Reparatur verursacht angesehen wird. Für den Originalhersteller des Batteriemoduls 100 ist es folglich aus verschiedenen Gründen wichtig zu wissen, ob ein Batteriemodul 100 geöffnet beziehungsweise repariert worden ist, insbesondere wenn die Reparatur nicht durch den Originalhersteller selbst erfolgt ist.

Zum Zweck des Erkennens einer Öffnung des Batteriemoduls 100 weist das Batteriemodul 100 wenigstens einen ersten Sensor 260 und optional mindestens einen weiteren Sensor 270 auf. Der erste Sensor 260 und der optionale weitere Sensor 270 sind bevorzugt im Inneren des Gehäuses 250 angeordnet. Der erste Sensor 260 und der optionale zweite Sensor 270 sind mit dem BMS 200 verbunden. Der erste Sensor 260 und der optionale zweite Sensor 270 ist jeweils dazu eingerichtet, eine erste Messgröße beziehungsweise weitere Messgröße zu erfassen, welche jeweils eine erkannte Öffnung des Gehäuses 250 repräsentiert. Die erste Messgröße und die weitere Messgröße können gleich oder alternativ unterschiedlicher Art sein. Beispielsweise ist der erste Sensor 260 oder der weitere Sensor 270 ein Lichtsensor, besonders bevorzugt weist der Lichtsensor eine Photodiode auf. Der Lichtsensor ist dazu eingerichtet, bei einer Öffnung des Gehäuses 250 einfallendes Licht zu erfassen. Alternativ ist der erste Sensor 260 oder der weitere Sensor 270 ein Temperatursensor, welcher eingerichtet ist, eine Temperaturänderung bei einer Öffnung des Gehäuses 250 zu erfassen. Alternativ ist der erste Sensor 260 oder der weitere Sensor 270 ein Gas- und/oder Feuchtigkeitssensor, welcher eingerichtet ist, bei einer Öffnung des Gehäuses 250 eine Veränderung der Luftzusammensetzung zu erfassen. Alternativ ist der erste Sensor 260 oder der weitere Sensor 270 ein mechanischer Taster, welcher eingerichtet ist, bei einer Öffnung des Gehäuses 250 betätigt zu werden. Beispielsweise ist der mechanische Taster zu diesem Zweck zwischen dem ersten Gehäuseteil 250a und dem zweiten Gehäuseteil 250b angeordnet. Alternativ ist der erste Sensor 260 oder der weitere Sensor 270 ein Magnetsensor, insbesondere ein Reed-Schalter, welcher eingerichtet ist, bei einer Öffnung des Gehäuses 250 betätigt zu werden. Alternativ ist der erste Sensor 260 oder der weitere Sensor 270 ein kapazitiver Sensor, wobei der kapazitive Sensor dazu eingerichtet ist, bei einer Öffnung des Gehäuses 250 eine Kapazität zu ändern. Diese Änderung der Kapazität kann durch das BMS 200 als Sensorsignal erkannt werden. Alternativ ist der erste Sensor 260 oder der weitere Sensor 270 ein induktiver Sensor, wobei der induktive Sensor dazu eingerichtet ist, bei einer Öffnung des Gehäuses 250 eine Induktivität zu ändern. Diese Änderung der Induktivität des Sensors kann durch das BMS 200 als Sensorsignal erkannt werden. Alternativ ist der erste Sensor 260 oder der weitere Sensor 270 ein Strom- und/oder Spannungssensor, welcher eingerichtet ist, eine Änderung eines Alterungszustands mindestens einer Batteriezelle 240 zu erfassen, so dass eine ausgetauschte Batteriezelle 240 als Sensorsignal erkannt werden kann. Das Batterie Management System 200 kann zur Deaktivierung des Batterie Management Systems 200 einen elektrischen Schalter 283, ein elektrisches Speicherelement 280 und/oder eine Schmelzsicherung 284 in einem Schaltkreis des BMS 200 aufweisen. Der erste Sensor 260 und/oder der weitere Sensor 270 ist beziehungsweise sind zur Energieversorgung mit Batteriezellen 240 des Batteriemoduls 100 und/oder mit einem separaten Energiespeicher 282 verbunden. Alternativ ist der erste Sensor 260 oder der weitere Sensor 270 eine RFID-Markierung, welche eingerichtet ist, bei einer Öffnung des Gehäuses 250 beschädigt zu werden. Alternativ ist der erste Sensor 260 oder der weitere Sensor 270 eine elektrische Leitung, welche eingerichtet ist, bei einer Öffnung des Gehäuses 250 zumindest beschädigt zu werden oder zu reißen. Alternativ ist der erste Sensor 260 oder der weitere Sensor 270 ein Drucksensor, welcher eingerichtet ist, bei Öffnung des Gehäuses 250 einen Druckunterschied zu detektieren. Alternativ ist der erste Sensor 260 oder der weitere Sensor 270 ein Beschleunigungssensor, welcher eingerichtet ist, bei Öffnung des Gehäuses 250 eine Beschleunigung zu detektieren. Am Batteriemodul 100 ist optional an einer Außenfläche des Gehäuses 250 eine Kontrollleuchte 285 vorgesehen. Ferner kann optional ein Kommunikationselement 281 in dem Gehäuse des Batteriemoduls 100 angeordnet sein, wobei das Kommunikationselement 281 dazu eingerichtet ist, ein Rücksetzsignal zu erfassen beziehungsweise zu empfangen, insbesondere erfolgt der Empfang kabellos per Funkverbindung, wodurch nach einer Deaktivierung eine Reaktivierung des Batterie Management Systems 200 erzeugt werden kann.

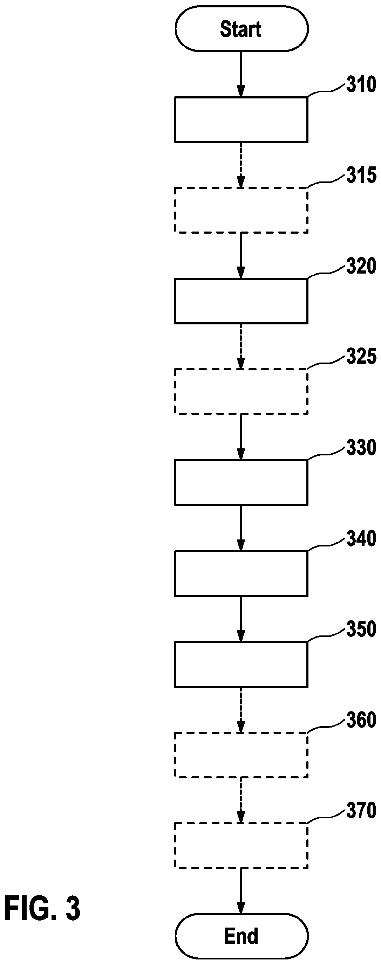

In Figur 3 ist ein Ablaufdiagramm eines Verfahrens zur Erkennung einer Öffnung eines Gehäuses 250 des Batteriemoduls 100 als Blockschaltbild dargestellt. Das Verfahren beginnt mit einer Erfassung 310 einer ersten Messgröße mittels des ersten Sensors, wobei die erfasste erste Messgröße eine erkannte Öffnung des Gehäuses repräsentiert und der erste Sensor im Gehäuse angeordnet ist. Optional kann es im Schritt 315 vorgesehen sein, dass eine weitere Messgröße mittels des weiteren Sensors 270 erfasst wird. Anschließend erzeugt der erste Sensor 260 im Schritt 320 ein erstes Sensorsignal in Abhängigkeit der erfassten ersten Messgröße. Optional erzeugt der weitere Sensor 270 im Schritt 325 ein weiteres Sensorsignal. In Abhängigkeit des erzeugten ersten Sensorsignals des ersten Sensors wird das Batterie Management System 200 aktiviert. Optional erfolgt die Aktivierung 330 des BMS 200 in Abhängigkeit des ersten Sensorsignals und/oder des weiteren Sensorsignals. Nach der Aktivierung 330 des BMS 200 wird im Schritt 340 ein Verriegelungssignal in Abhängigkeit des ersten Sensorsignals und/oder des weiteren Sensorsignals mittels des Batterie Management Systems 200 erzeugt. Im Schritt 350 wird das Batterie Management System 200 in Abhängigkeit des erzeugten Verriegelungssignals deaktiviert. Die Deaktivierung 350 kann reversibel oder alternativ irreversibel sein. Die Deaktivierung 350 des Batterie Management Systems 200 erfolgt vorzugsweise mittels eines elektrischen Schalters 284, mittels eines Schreibens eines Parameters in ein elektrisches Speicherelement 280 des Batterie Management Systems 200 und/oder mittels einer Schmelzsicherung 283 in einem Schaltkreis des Batterie Management Systems 200. In einem optionalen Schritt 360 kann ein Einschalten einer Kontrollleuchte in Abhängigkeit des erzeugten Verriegelungssignals vorgesehen sein, wobei die Kontrollleuchte 285 an einer Außenfläche des Gehäuses 250 angeordnet ist und eine erfolgreiche Deaktivierung anzeigt. Optional kann eine Reaktivierung 370 des Batterie Management Systems 200 durch ein Rücksetzsignal erfolgen, wobei das Rücksetzsignal beispielsweise mittels einer externen Recheneinheit erzeugt wird. Das Rücksetzsignal kann durch eine Empfangseinheit beziehungsweise ein Kommunikationselement 281 kabellos oder durch eine elektrische Verbindung zum BMS, beispielsweise durch Kontaktierung an einer Steckverbindungsschnittstelle für das Kabel 230, übertragen werden.

## Patentansprüche

1. Verfahren zur Erkennung einer Öffnung eines Gehäuses (250) eines Batteriemoduls (100) aufweisend die Schritte
• Erfassung (310) einer ersten Messgröße mittels eines ersten Sensors (260), wobei die erfasste erste Messgröße eine erkannte Öffnung des Gehäuses (250) repräsentiert,
• Erfassung (315) einer weiteren Messgröße mittels eines weiteren Sensors (270), wobei die erfasste weitere Messgröße die Öffnung des Gehäuses (250) repräsentiert,
• Erzeugung (320) eines ersten Sensorsignals mittels des ersten Sensors (260) in Abhängigkeit der erfassten ersten Messgröße,
• Erzeugung (325) eines weiteren Sensorsignals mittels des weiteren Sensors (270) in Abhängigkeit der erfassten weiteren Messgröße, und
• Aktivierung (330) eines Batterie Management Systems (200) in Abhängigkeit des ersten Sensorsignals,
• Erzeugung (340) eines Verriegelungssignals in Abhängigkeit des ersten Sensorsignals des ersten Sensors (260) und zusätzlich in Abhängigkeit des weiteren Sensorsignals mittels des Batterie Management Systems (200), und
• Deaktivierung (350) des Batterie Management Systems (200) in Abhängigkeit des erzeugten Verriegelungssignals.

2. Verfahren nach einem der vorhergehenden Ansprüche, wobei folgender Schritt durchgeführt wird
• Einschalten (360) einer Kontrollleuchte (285) in Abhängigkeit des erzeugten Verriegelungssignals, wobei die Kontrollleuchte (285) an einer Außenfläche des Gehäuses (250) angeordnet ist.

3. Verfahren nach einem der vorhergehenden Ansprüche, wobei folgender Schritt durchgeführt wird
• Reaktivierung (370) des Batterie Management Systems (200) durch ein Rücksetzsignal, wobei das Rücksetzsignal mittels einer externen Recheneinheit erzeugt wird.

4. Verfahren nach einem der vorhergehenden Ansprüche, wobei die Deaktivierung des Batterie Management Systems (200)
• mittels eines elektrischen Schalters (284),
• mittels eines Schreibens eines Parameters in ein elektrisches Speicherelement (280) des Batterie Management Systems (200), und/oder
• mittels einer Schmelzsicherung (283) in einem Schaltkreis des Batterie Management Systems (200),
erfolgt.

5. Batteriemodul (100), umfassend ein Gehäuse (250) und ein Batterie Management System (200), welches dazu eingerichtet ist, ein Verfahren nach einem der Ansprüche 1 bis 4 durchzuführen, wobei das Batteriemodul (100) zumindest folgende Komponente aufweist
• einen ersten Sensor (260), wobei der erste Sensor (260) dazu eingerichtet ist, eine erste Messgröße zu erfassen, welche eine erkannte Öffnung des Batteriemodulgehäuses (250) repräsentiert, und in Abhängigkeit der ersten Messgröße ein erstes Sensorsignal zu erzeugen, und
• einen weiteren Sensor (270), wobei der weitere Sensor (270) dazu eingerichtet ist, eine weitere Messgröße zu erfassen, welche eine erkannte Öffnung des Batteriemodulgehäuses (250) repräsentiert, und in Abhängigkeit der weiteren Messgröße ein weiteres Sensorsignal zu erzeugen.

6. Batteriemodul (100) nach Anspruch 5, wobei der erste Sensor (260) wenigstens folgende Komponente umfasst
• ein Lichtsensor, welcher eingerichtet ist, bei einer Öffnung des Gehäuses (250) einfallendes Licht zu erfassen, und/oder
• ein Temperatursensor, welcher eingerichtet ist, eine Temperaturänderung bei einer Öffnung des Gehäuses (250) zu erfassen, und/oder
• ein Gas- und/oder Feuchtigkeitssensor, welcher eingerichtet ist, bei einer Öffnung des Gehäuses (250) eine Veränderung der Luftzusammensetzung zu erfassen, und/oder
• ein mechanischer Taster, welcher eingerichtet ist, bei einer Öffnung des Gehäuses (250) betätigt zu werden, und/oder
• ein Magnetsensor, insbesondere ein Reed-Schalter, welcher eingerichtet ist, bei einer Öffnung des Gehäuses (250) betätigt zu werden, und/oder
• ein kapazitiver Sensor, welcher eingerichtet ist, bei Öffnung des Gehäuses (250) seine Kapazität zu ändern, und/oder
• ein induktiver Sensor, welcher eingerichtet ist, bei Öffnung des Gehäuses (250) eine Induktivität zu ändern, und/oder
• ein Strom- und/oder Spannungssensor, welcher eingerichtet ist, eine Änderung eines Alterungszustands mindestens einer Batteriezelle (240) zu erfassen, und/oder
• eine RFID-Markierung, welche eingerichtet ist, bei einer Öffnung des Gehäuses (250) beschädigt zu werden, und/oder
• eine elektrische Leitung, welche eingerichtet ist, bei einer Öffnung des Gehäuses (250) zu reißen, und/oder
• ein Drucksensor, welcher eingerichtet ist, bei Öffnung des Gehäuses (250) einen Druckunterschied zu detektieren, und/oder
• ein Beschleunigungssensor, welcher eingerichtet ist, bei Öffnung des Gehäuses (250) eine Beschleunigung zu detektieren.

7. Batteriemodul (100) nach einem der Ansprüche 5 oder 6, umfassend wenigstens eine der folgenden Komponenten, welche dazu eingerichtet ist, das Batterie Management System (200) in Abhängigkeit eines Verriegelungssignals zu deaktivieren,
• ein elektrischer Schalter (284),
• ein elektrisches Speicherelement (280) des Batterie Management Systems (200), und/oder
• eine Schmelzsicherung (283) in einem Schaltkreis des Batterie Management Systems (200).

8. Batteriemodul (100) nach einem der Ansprüche 5 bis 7, wobei der erste Sensor (260) zur Energieversorgung mit Batteriezellen (240) des Batteriemoduls (100) und/oder mit einem separaten Energiespeicher (282) verbunden ist.

9. Elektrofahrrad (10), aufweisend ein Batteriemodul (100) nach einem der Ansprüche 5 bis 8.

## Claims

1. Method for detecting an opening of a housing (250) of a battery module (100), having the steps of
• measuring (310) a first measured variable by means of a first sensor (260), wherein the measured first measured variable represents a detected opening of the housing (250),
• measuring (315) a further measured variable by means of a further sensor (270), wherein the measured further measured variable represents the opening of the housing (250),
• generating (320) a first sensor signal by means of the first sensor (260) on the basis of the measured first measured variable,
• generating (325) a further sensor signal by means of the further sensor (270) on the basis of the measured further measured variable, and
• activating (330) a battery management system (200) on the basis of the first sensor signal,
• generating (340) a locking signal on the basis of the first sensor signal of the first sensor (260) and additionally on the basis of the further sensor signal by means of the battery management system (200), and
• deactivating (350) the battery management system (200) on the basis of the generated locking signal.

2. Method according to one of the preceding claims, wherein the following step is carried out
• switching on (360) an indicator lamp (285) on the basis of the generated locking signal, wherein the indicator lamp (285) is arranged on an outer surface of the housing (250).

3. Method according to either of the preceding claims, wherein the following step is carried out
• reactivating (370) the battery management system (200) by way of a reset signal, wherein the reset signal is generated by means of an external computing unit.

4. Method according to one of the preceding claims, wherein the battery management system (200) is deactivated
• by means of an electrical switch (284),
• by writing a parameter to an electrical storage element (280) of the battery management system (200), and/or
• by means of a fuse (283) in a circuit of the battery management system (200).

5. Battery module (100), comprising a housing (250) and a battery management system (200), which is configured to carry out a method according to one of Claims 1 to 4, wherein the battery module (100) has at least the following components
• a first sensor (260), wherein the first sensor (260) is configured to measure a first measured variable, which represents a detected opening of the battery module housing (250), and to generate a first sensor signal on the basis of the first measured variable, and
• a further sensor (270), wherein the further sensor (270) is configured to measure a further measured variable, which represents a detected opening of the battery module housing (250), and to generate a further sensor signal on the basis of the further measured variable.

6. Battery module (100) according to Claim 5, wherein the first sensor (260) comprises at least the following components
• a light sensor which is configured to capture incident light when the housing (250) is opened, and/or
• a temperature sensor which is configured to sense a change in temperature when the housing (250) is opened, and/or
• a gas and/or moisture sensor which is configured to sense a change in the air composition when the housing (250) is opened, and/or
• a mechanical pushbutton which is configured to be operated when the housing (250) is opened, and/or
• a magnetic sensor, in particular a reed switch, which is configured to be operated when the housing (250) is opened, and/or
• a capacitive sensor which is configured to change its capacitance when the housing (250) is opened, and/or
• an inductive sensor which is configured to change its inductance when the housing (250) is opened, and/or
• a current and/or voltage sensor which is configured to sense a change in a state of health of at least one battery cell (240), and/or
• an RFID marker which is configured to be damaged when the housing (250) is opened, and/or
• an electrical line which is configured to break when the housing (250) is opened, and/or
• a pressure sensor which is configured to detect a difference in pressure when the housing (250) is opened, and/or
• an acceleration sensor which is configured to detect an acceleration when the housing (250) is opened.

7. Battery module (100) according to either of Claims 5 and 6, comprising at least one of the following components that is configured to deactivate the battery management system (200) on the basis of a locking signal
• an electrical switch (284),
• an electrical storage element (280) of the battery management system (200), and/or
• a fuse (283) in a circuit of the battery management system (200) .

8. Battery module (100) according to one of Claims 5 to 7, wherein the first sensor (260) is connected to battery cells (240) of the battery module (100) and/or to a separate energy store (282) in order to be supplied with power.

9. Electric bicycle (10) having a battery module (100) according to one of Claims 5 to 8.

## Revendications

1. Procédé de reconnaissance d'une ouverture d'un boîtier (250) d'un module de batterie (100), comprenant les étapes suivantes
* acquisition (310) d'une première grandeur de mesure au moyen d'un premier capteur (260), la première grandeur de mesure acquise représentant une ouverture reconnue du boîtier (250),
* acquisition (315) d'une grandeur de mesure supplémentaire au moyen d'un capteur supplémentaire (270), la grandeur de mesure supplémentaire représentant l'ouverture du boîtier (250),
* génération (320) d'un premier signal de capteur au moyen du premier capteur (260) en fonction de la première grandeur de mesure acquise,
* génération (325) d'un signal de capteur supplémentaire au moyen du capteur supplémentaire (270) en fonction de la grandeur de mesure supplémentaire acquise, et
* activation (330) d'un système de gestion de batterie (200) en fonction du premier signal de capteur,
* génération (340) d'un signal de verrouillage en fonction du premier signal de capteur du premier capteur (260) et en plus en fonction du signal de capteur supplémentaire au moyen du système de gestion de batterie (200), et
* désactivation (350) du système de gestion de batterie (200) en fonction du signal de verrouillage généré.

2. Procédé selon l'une des revendications précédentes, l'étape suivante étant exécutée
* allumage (360) d'un témoin lumineux de contrôle (285) en fonction du signal de verrouillage généré, le témoin lumineux de contrôle (285) étant disposé sur une surface extérieure du boîtier (250).

3. Procédé selon l'une des revendications précédentes, l'étape suivante étant exécutée
* réactivation (370) du système de gestion de batterie (200) par un signal de réinitialisation, le signal de réinitialisation étant généré au moyen d'une unité de calcul externe.

4. Procédé selon l'une des revendications précédentes, la désactivation du système de gestion de batterie (200) étant effectuée
* au moyen d'un commutateur électrique (284),
* au moyen d'une écriture d'un paramètre dans un élément de mémoire électrique (280) du système de gestion de batterie (200), et/ou
* au moyen d'un fusible (283) dans un circuit du système de gestion de batterie (200).

5. Module de batterie (100), comprenant un boîtier (250) et un système de gestion de batterie (200), lequel est conçu pour mettre en œuvre un procédé selon l'une des revendications 1 à 4, le module de batterie (100) possédant au moins les composants suivants
* un premier capteur (260), le premier capteur (260) étant conçu pour acquérir une première grandeur de mesure, laquelle représente une ouverture reconnue du boîtier (250) de module de batterie, et pour générer un premier signal de capteur en fonction de la première grandeur de mesure, et
* un capteur supplémentaire (270), le capteur supplémentaire (270) étant conçu pour acquérir une grandeur de mesure supplémentaire, laquelle représente une ouverture reconnue du boîtier (250) de module de batterie, et pour générer un signal de capteur supplémentaire en fonction de la grandeur de mesure supplémentaire.

6. Module de batterie (100) selon la revendication 5, le premier capteur (260) comportant au moins les composants suivants
* un capteur de lumière, lequel est conçu pour détecter de la lumière incidente lors d'une ouverture du boîtier (250), et/ou
* un capteur de température, lequel est conçu pour détecter une variation de température lors d'une ouverture du boîtier (250), et/ou
* un capteur de gaz et/ou d'humidité, lequel est conçu pour détecter une modification de la composition de l'air lors d'une ouverture du boîtier (250), et/ou
* un palpeur mécanique, lequel est conçu pour être actionné lors d'une ouverture du boîtier (250), et/ou
* un capteur magnétique, notamment un commutateur Reed, lequel est conçu pour être actionné lors d'une ouverture du boîtier (250), et/ou
* un capteur capacitif, lequel est conçu pour modifier sa capacité lors de l'ouverture du boîtier (250), et/ou
* un capteur inductif, lequel est conçu pour modifier une inductance de l'ouverture du boîtier (250), et/ou
* un capteur de courant et/ou de tension, lequel est conçu pour détecter une modification d'un état de vieillissement d'au moins une cellule de batterie (240), et/ou
* un marquage RFID, lequel est conçu pour être endommagé lors d'une ouverture du boîtier (250), et/ou
* un câble électrique, lequel est conçu pour se rompre lors d'une ouverture du boîtier (250), et/ou
* un capteur de pression, lequel est conçu pour détecter une différence de pression lors de l'ouverture du boîtier (250), et/ou
* un capteur d'accélération, lequel est conçu pour détecter une accélération lors de l'ouverture du boîtier (250) .

7. Module de batterie (100) selon l'une des revendications 5 ou 6, comprenant au moins l'un des composants suivants, lequel est conçu pour désactiver le système de gestion de batterie (200) en fonction d'un signal de verrouillage,
* un commutateur électrique (284),
* un élément de mémoire électrique (280) du système de gestion de batterie (200), et/ou
* un fusible (283) dans un circuit du système de gestion de batterie (200).

8. Module de batterie (100) selon l'une des revendications 5 à 7, le premier capteur (260), pour l'alimentation en énergie, étant relié à des cellules de batterie (240) du module de batterie (100) et/ou à un accumulateur d'énergie (282) séparé.

9. Bicyclette électrique (10), comprenant un module de batterie (100) selon l'une des revendications 5 à 8.
